Europäisches Patentamt

European Patent Office

Office européen des brevets

(19)

(11) Veröffentlichungsnummer: **0 169 273**
**B1**

(12)

# EUROPÄISCHE PATENTSCHRIFT

(45) Veröffentlichungstag der Patentschrift:
**08.06.88**

(21) Anmeldenummer: **84115755.5**

(22) Anmeldetag: **18.12.84**

(51) Int. Cl.⁴: **H 04 N 9/43,** H 04 N 5/32

(54) **Röntgendiagnostikeinrichtung.**

(30) Priorität: **20.06.84 DE 3422875**

(43) Veröffentlichungstag der Anmeldung:
**29.01.86 Patentblatt 86/5**

(45) Bekanntmachung des Hinweises auf die Patenterteilung:
**08.06.88 Patentblatt 88/23**

(84) Benannte Vertragsstaaten:
**DE FR**

(56) Entgegenhaltungen:
**DE-A-3 133 000**
**DE-C-3 018 129**

(73) Patentinhaber: **Siemens Aktiengesellschaft Berlin und München, Wittelsbacherplatz 2, D-8000 München 2 (DE)**

(72) Erfinder: **Händle, Jörg, Leipziger Strasse 16g, D-8520 Erlangen (DE)**
Erfinder: **Maass, Wolfgang, Haunritzer Weg 2, D-8500 Nürnberg (DE)**

EP 0 169 273 B1

## Beschreibung

Die Erfindung betrifft eine Röntgendiagnostikeinrichtung mit einer Fernsehaufnahmeeinrichtung, mit wenigstens einem Bildspeicher, einer Differenzstufe zur Erstellung von Subtraktionsbildern durch Differenzbildung aus einem gespeicherten und einem dem gespeicherten zeitlich nachfolgenden Videosignal, mit einer Auswerteschaltung zur Zeitauswertung des Differenzsignales und mit einem Farbmonitor, bei der die Auswerteschaltung eine Zeitstufe und einen Farbumsetzer enthält. Subtraktionsbilder finden bei Durchleuchtungen, insbesondere bei der selektiven Angiographie, Verwendung, um Blutgefäße, die im normalen Röntgenbild nur schlecht zu erkennen sind oder von Knochenstrukturen überlagert werden, deutlich sichtbar zu machen.

Aus der DE-PS-30 18 129 ist eine derartige Röntgendiagnostikeinrichtung bekannt, bei der eine Auswerteschaltung mittels eines Komparators das zeitliche Auftreten von Veränderungen im Differenzbild erkennt und die entsprechenden Zeitinformationen einer Zeitstufe in einen Zeitspeicher einliest. Diese Zeitinformationen bestehen aus Zahlenwerten, wobei die Größe der eingespeicherten Zahlenwerte das zeitliche Auftreten des Maximums des Kontrastmittelflusses kennzeichnet. In einem an dem Speicher angeschlossenen Farbumsetzer werden diese Zahlenwerte in Videosignale unterschiedlicher Farben umgewandelt und auf einem Farbmonitor wiedergegeben. Auf dem Monitor ist anhand dieses Farbbildes der Kontrastmittelverlauf in seiner Lage und dem zeitlichen Auftreten seines Maximums zu erkennen. So ist beispielsweise eine von Kontrastmittel durchflossene Blutbahn farbig dargestellt, wobei beispielsweise die roten Bildpunkte einen frühen Zeitpunkt signalisieren, während die blauen Bildpunkte das zeitliche Ende des Kontrastmittelflusses wiedergeben. Nach erfolgter Aufnahme ist also das gesamte Bild mit seinen farbigen Zeitinformationen zu sehen. Durch die Verwendung eines Komparators zur Detektion von Maxima in dem Differenzsignal treten aber bedingt durch das Quantenrauschen bildpunktweise Fehlinformationen auf, die zu farbigen Störungen im Farbsubtraktionsbild führen.

Die Erfindung geht von der Aufgabe aus, eine Röntgendiagnostikeinrichtung der eingangs genannten Art zu schaffen, die eine sichere Auswertung des zeitlichen Verlaufes des Kontrastmittelflusses ermöglicht und bei der Störungen, beispielsweise hervorgerufen durch Quantenrauschen, nahezu vollständig unterdrückt werden.

Die Aufgabe wird erfindungsgemäß dadurch gelöst, daß der Farbumsetzer direkt mit der Differenzstufe verbunden ist und das Differenzbild in ein einfarbiges Intensitätsbild umsetzt, dessen Bildfarbe in Abhängigkeit von dem zeitlichen Auftreten des Differenzbildes von der Zeitstufe gesteuert wird, daß der Farbumsetzer für jede Grundfarbe je einen Ausgang hat und daß an den Ausgangen des Farbumsetzers je ein Speicher angeschlossen ist, in denen die Ausgangssignale des Farbumsetzers summierend eingespeichert werden. Durch die Addition der einzelnen ein farbigen Intensitätsbilder in den Speichern entsteht einfarbiges Subtraktionsbild, das durch seine Farbe die Lage und das zeitliche Auftreten des Kontrastmittels kennzeichnet. Einzelne Störungen innerhalb der Bilder, hervorgerufen durch Quantenrauschen, bewirken durch diese Integration über den gesamten Kontrastmittelverlauf keine die Erkennbarkeit beeinträchtigenden farbigen Störstellen.

Die Erfindung ist nachfolgend anhand eines in der Zeichnung dargestellten Ausführungsbeispieles näher erläutert. Es zeigen:
Fig. 1 ein Blockschaltbild einer Röntgendiagnostikeinrichtung, und
Fig. 2 ein Blockschaltbild der erfindungsgemäßen Subtraktionsschaltung der Röntgendiagnostikeinrichtung gemäß Figur 1.

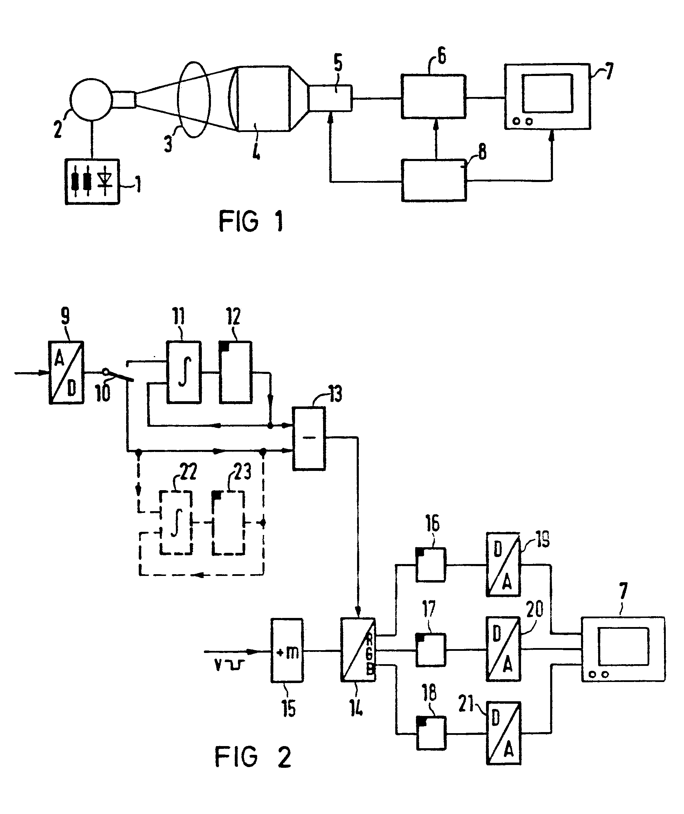

In Figur 1 ist eine Röntgendiagnostikeinrichtung mit einer von einem Hochspannungsgenerator 1 gespeisten Röntgenröhre 2 dargestellt, in deren Strahlengang sich ein Patient 3 befindet. Ein im Strahlengang nachfolgender Röntgenbildverstärker 4 ist mit einer Fernsehkamera 5 verbunden, deren Ausgang auf eine Subtraktionsschaltung 6 geführt ist. Das dort verarbeitete Signal wird auf einem Farbmonitor 7 dargestellt. Ein Synchrontaktgenerator 8 steuert die Synchronisation der zeitlichen Funktionsablaufe der Fernsehkamera 5, der Subtraktionsschaltung 6 und des Farbmonitors 7.

Der in Figur 2 dargestellten Subtraktionsschaltung 6 wird das Videosignal der Fernsehkamera 5 zugeführt, das in einem die Eingangsstufe bildenden Analog/Digital-Wandler (A/D-Wandler) 9 in digitale Bildpunkte zerlegt wird. Der Ausgang des A/D-Wandlers 9 ist mit einem Umschalter verbunden, dessen einer Schaltkontakt auf eine erste Integrationsstufe 11 geführt ist. Das Ausgangssignal der ersten Integrationsstufe 11 wird in einen ersten Bildspeicher 12 eingelesen, dessen Ausgang auf den Eingang der ersten Integrationsstufe 11 rückgekoppelt ist, so daß in dem ersten Bildspeicher 12 ein rauschvermindertes Bild enthalten ist. Der zweite Schaltkontakt des Umschalters 10 ist mit einer Differenzstufe 13 verbunden, an derem zweiten Eingang der Ausgang des ersten Bildspeichers 12 angeschlossen ist und in der das in dem ersten Bildspeicher 12 gespeicherte Videosignal vom aktuellen, dem gespeicherten nachfolgenden Videosignal abgezogen wird.

Das so gebildete Differenzsignal ist dem einen Eingang eines Farbumsetzers 14 zugeführt, dessen zweiter Eingang mit einem mit den Vertikalimpulsen V der Fernsehkamera 5 beaufschlagten Zeitzähler 15 verbunden ist. Der Rot-Ausgang R des Farbumsetzers 14 ist mit einem ersten Speicher 16, der Grün-Ausgang G mit einem zweiten Speicher 17 und der Blau-Ausgang B mit einem dritten Speicher 18 verbunden, in denen die Ausgangssignale des Farbumsetzers 14 summierend eingespeichert werden. Die Ausgangssignale der Speicher 16 bis 18 werden über je einen Digital/Analog-Wandler (D/A-Wandler) 19 bis 21 dem Farbmonitor 7 zugeführt.

Zu Beginn der Aufnahmeszene wird der Zeitzähler 15 auf Null gesetzt und zählt anschließend als Zeitinformation die vertikalen Taktimpulse V. Diese Zahlenwerte des Zeitzählers 15, die einer Zeitskala entsprechen, werden dem Farbumsetzer 14 zugeführt, der in Abhängigkeit von diesen Zahlenwerten eine Bildfarbe auswählt, die beispielsweise Rot, Orange, Gelb, Grün, Türkis oder Blau annehmen kann. Diese ausgewählte Bildfarbe wird mit dem Subtraktionssignal der Differenzstufe 13 moduliert, so daß sich ein einfarbiges Intensitätsbild ergibt. Diese Bildfarben wandelt der Farbumsetzer 14 in ihre Grundfarben Rot, Grün und Blau, deren Intensitätsverläufe in den Speichern 16 bis 18 eingespeichert werden. So erzeugt beispielsweise ein Intensitätsbild mit der Bildfarbe Gelb je ein Intensitätsbild mit den Grundfarben Rot und Grün. Diese Intensitätsbilder in den Grundfarben werden in den Speichern 16 bis 18 summierend überlagert, so daß nach Beendigung der Aufnahme die Ausgangssignale der Bildspeicher 16 bis 18 auf dem Farbmonitor 7 ein Farbsubtraktionsbild erzeugen, aus dem aufgrund der Bildfarbe der Bildpunkte der zeitliche Verlauf des Kontrastmittels erkennbar ist. Dieses Farbsubtraktionsbild besteht also aus den über den gesamten Kontrastmittelverlauf integrierten Differenzbildern unterschiedlicher Bildfarben.

Um auch das aktuelle Bild möglichst von Quantenrauschen zu befreien, können, wie in Figur 2 gestrichelt dargestellt, zwischen dem Umschalter 10 und der Differenzstufe 13 eine zweite Integrationsstufe 22 und ein zweiter Bildspeicher 23 vorgesehen sein. Diese Integration kann über eine variable Bildzahl erfolgen, die zweckmäßigerweise der Geschwindigkeit der Änderung des Kontrastmittelflusses angepaßt wird.

Anstelle der summierenden Speicher 16 bis 18 lassen sich auch normale Speicher verwenden, wenn vor diesen je eine Additionsstufe geschaltet ist, auf deren zweiten Eingang das Ausgangssignal des entsprechenden Speichers 16 bis 18 rückgekoppelt ist. Anstelle der Integrationsstufen und der Additionsstufen lassen sich aber auch Rekursivfilterschaltungen verwenden.

## Patentanspruch

Röntgendiagnostikeinrichtung mit einer Fernsehaufnahmeeinrichtung (5), mit wenigstens einem Bildspeicher (12), einer Differenzstufe (13) zur Erstellung von Subtraktionsbildern durch Differenzbildung aus einem gespeicherten und einem dem gespeicherten zeitlich nachfolgenden Videosignal, mit einer Auswerteschaltung (14 bis 21) zur Zeitauswertung des Differenzsignales und mit einem Farbmonitor (7), bei der die Auswerteschaltung (14 bis 21) eine Zeitstufe (15) und einen Farbumsetzer (14) enthält, dadurch gekennzeichnet, daß der Farbumsetzer (14) direkt mit der Differenzstufe (13) verbunden ist und das Differenzbild in ein einfarbiges Intensitätsbild umsetzt, dessen Bildfarbe in Abhängigkeit von dem zeitlichen Auftreten des Differenzbildes von der Zeitstufe (15) gesteuert wird, daß der Farbumsetzer (14) für jede Grundfarbe (R, G, B) je einen Ausgang hat und daß an den Ausgängen des Farbumsetzers (14) je ein Speicher (16 bis 18) angeschlossen ist, in denen die Ausgangssignale des Farbumsetzers (14) summierend eingespeichert werden.

## Claims

X-ray diagnostic equipment with a visual display device (5) having: at least one image store (12); a differential stage (13) for generation of substraction images by forming the difference between a stored video signal and a video signal following in time said stored signal; an evaluation circuit (14 to 21) for time evaluation of the difference signal; and a colour monitor (7), in which the evaluation circuit (14 to 21) comprises a timer (15) and a colour converter (14), characterised in that, the colour converter (14) is connected directly to the differential stage (13) and converts the difference image into a monochromatic intensity image, the image colour of which, dependent on the temporal occurence of the difference image, is controlled by the timer (15), in that the colour converter (14) has for each primary colour (r,g,b) an output and that at the outputs of the colour converter (14) there are coupled respective stores (16 to 18) in which the output signals of the colour converter (14) are stored in an additive manner.

## Revendications

Appareil de radiodiagnostic comportant un dispositif de prise de vues de télévision (5), au moins une mémoire d'images (12), un étage (13) de formation d'une différence servant à former des images soustractives par formation de la différence entre un signal vidéo mémorisé et un signal vidéo qui suit dans le temps le signal mémorisé, un circuit d'évaluation (14 à 21) servant à évaluer le temps du signal de différence et un téléviseur de contrôle en couleurs (7), et dans lequel le circuit d'évaluation (14 à 21) contient un compteur des temps (15) et un convertisseur des couleurs (14), caractérisé en ce que le convertisseur des couleurs (14) est relié directement à l'étage (13) de formation de la différence et convertit l'image soustractive en une image d'intensité monocolore, dont la couleur est commandée par le compteur des temps (15) en fonction de l'apparition dans le temps de l'image soustractive, que le convertisseur des couleurs (14) possède une sortie respective pour chaque couleur fondamentale (R, G, B) et qu'aux sorties du convertisseur des couleurs (14) se trouvent raccordées des mémoires respectives (16 à 18), dans lesquelles les signaux de sortie du convertisseur des couleurs (14) sont mémorisés en étant additionnés.

FIG 1

FIG 2